# EUROPEAN PATENT APPLICATION

(11) **EP 4 783 252 A1**
(43) Date of publication of application: **29.07.2026**
(21) Application number: 24867478.0
(22) Date of filing: 19.09.2024
(51) Int. Cl.: H01M 4/36, H01M 4/505, H01M 4/525

(54) **POSITIVE ELECTRODE MATERIAL FOR LITHIUM ION BATTERY AND PREPARATION METHOD THEREFOR, POSITIVE ELECTRODE PIECE, AND SECONDARY BATTERY**

(30) Priority: 20.09.2023 CN 202311223067
(71) Applicant: BYD Company Limited, Shenzhen, Guangdong 518118 (CN)
(72) Inventor: TIAN, Yecheng, Shenzhen, Guangdong 518118 (CN); GE, Liping, Shenzhen, Guangdong 518118 (CN); YU, Xuyang, Shenzhen, Guangdong 518118 (CN); ZHANG, Mengxia, Shenzhen, Guangdong 518118 (CN); CUI, Pengyu, Shenzhen, Guangdong 518118 (CN)
(74) Representative: Taor, Simon Edward William
(86) International application number: PCT/CN2024/119564
(87) International publication number: WO 2025/061072

(57) **Abstract**

A positive electrode material for a lithium ion battery, a preparation method therefor, a positive electrode piece, and a secondary battery. The positive electrode material comprises an inner core, a first shell layer, and a second shell layer. The first shell layer covers the surface of the inner core, and the second shell layer covers the surface of the first shell layer that is away from the inner core. The inner core comprises a first transition metal oxide having a (003) crystal plane, and the first shell layer comprises a second transition metal oxide. For the first transition metal oxide and the second transition metal oxide at least one of the following are different: the space groups and the materials. The included angle between a first interface and plane occupied by the at least part of the (003) crystal plane in the inner core ranges from 80 degrees to 100 degrees, where the first interface is the surface of the second shell layer away from the first shell laver. The material of the second shell layer comprises an amorphous conductive material.

## Description

### CROSS-REFERENCE TO RELATED APPLICATIONS

The present disclosure claims priority to Chinese Patent Application No. 202311223067.7 filed on September 20, 2023, entitled "POSITIVE ELECTRODE MATERIAL FOR LITHIUM ION BATTERY, PREPARATION METHOD THEREFOR AND APPLICATION THEREOF", which is incorporated herein by reference in its entirety.

### FIELD

The present disclosure relates to the technical field of batteries, in particular to a positive electrode material for a lithium ion battery, a preparation method therefor, a positive electrode piece, and a secondary battery.

### BACKGROUND

At present, layered transition metal oxide materials are welcomed by the market due to their simple structure, easy processing, high capacity and other characteristics. However, mechanical stress caused by anisotropic volume change of the layered material during the charge and discharge cycle can cause cracks in the material, which increases the contact area between the electrode active material and the electrolyte to cause side reactions, thereby shortening the cycle life of the material and reducing the rate performance.

Changing the material and/or space group structure of the layered material can alleviate the above problems. Therefore, in the industry, the surface of the layered transition metal oxide material is generally covered with inert layers of isomeric and/or different materials to reduce the side reaction at the interface of the core positive electrode material, thereby alleviating the cracking of the core positive electrode layered material, and improving the cycle service life of the positive electrode material. However, the difference in space group and/or material between the covering layer and the core material can cause the steric hindrance of the active ion deintercalation/intercalation to increase, resulting in obstruction of the deintercalation/intercalation of the active ion, so that the migration rate of the active ion in the positive electrode material is reduced, resulting in polarization of the electrode piece, and it is also not conducive to the rate performance of the battery.

### SUMMARY

In view of this, the present disclosure provides a positive electrode material for a lithium ion battery, the plane where at least part of the (003) crystal planes in the inner core of the positive electrode material are located is at a specific angle with a first interface, which can reduce the steric hindrance caused by the difference in space group and/or material between the material of the inner core and the material of the first shell layer, thereby facilitating the deintercalation/intercalation of the active ion, improving the rate performance of the battery, and reducing polarization and prolonging the cycle service life of the battery.

The first aspect of the present disclosure provides a positive electrode material for a lithium ion battery. The positive electrode material includes an inner core, a first shell layer, and a second shell layer, the first shell layer covers a surface of the inner core, and the second shell layer covers a surface of the first shell layer away from the inner core; the inner core includes a first transition metal oxide having a (003) crystal plane, and the first shell layer includes a second transition metal oxide;
at least one of the following is different between the first transition metal oxide and the second transition metal oxide: a space group and a material;
an angle between a plane where at least part of the (003) crystal planes in the inner core are located and a first interface is 80° to 100°, and the first interface is defined as a surface of the second shell layer away from the first shell layer; and
a material of the second shell layer includes an amorphous conductive material.

The first shell layer can prevent the inner core from being in direct contact with the electrolyte or the electrolyte solution, thereby inhibiting the cracking of the layered active material caused by side reactions, improving the structural stability of the inner core, and prolonging the cycle service life of the material. Meanwhile, the angle between the plane where at least part of the (003) crystal planes in the inner core are located and the first interface is in the range of 80° to 100°, which can reduce the steric hindrance caused by the change in the space group and/or the material between the inner core and the first shell layer, improve the solid-phase diffusion rate of the active ions, improve the rate performance of the material, reduce the polarization, improve the safety performance of the battery, and prolong the cycle service life of the battery. The second shell layer can provide more channels for the migration of electrons and ions, increase the infiltration of the electrolyte, reduce the contact resistance of the positive electrode material, and improve the power performance of the material. Therefore, the positive electrode material has better rate and power performance and longer cycle service life.

In some embodiments, in the inner core, the angle between the plane where at least 50% of the (003) crystal planes are located and the first interface is 80° to 100°.

In some embodiments, in the inner core, the angle between the plane where at least part of the (003) crystal planes are located and the first interface is 89° to 91°.

In some embodiments, the first transition metal oxide includes Li₁₋ₐAₐ(NiₓCo_{y}Mn_{z})M_{1-x-y-z}O₂₋ᵥX_{w}; wherein A element includes at least one of Na, K, Be, Mg, Ca, and B, 0≤a≤0.1; 0≤1-x-y-z≤0.1, x≥0, y≥0, z≥0, 0≤v≤0.05, 0≤w≤0.1; M element includes one or more of V, Ti, Cr, Fe, Co, Ni, Zn, Nb, Mo, Os, and W; and X element includes one or more of F, S, and Cl.

In some embodiments, the second transition metal oxide includes Li₁₋ₐ₁Aₐ₁(Niₓ₁Co_{y1}Mn_{z1})M_{1-x1-y1-z1}O₂₋ᵥ₁X_{w1}; wherein A element includes at least one of Na, K, Be, Mg, Ca, and B, 0≤a1≤0.1; 0≤1-x1-y1-z1≤0.1, x1≥0, y1≥0, z1≥0, 0≤v1≤0.05, 0≤w1≤0.1; M element includes one or more of V, Ti, Cr, Fe, Co, Ni, Zn, Nb, Mo, Os, and W; and X element includes one or more of F, S, and Cl.

In some embodiments, the space group of the second transition metal oxide is different from the space group of the first transition metal oxide.

In some embodiments, the space group of the second transition metal oxide is at least one of Fd3m and Fm3m.

In some embodiments, a thickness of the first shell layer is in a range of 1 nm to 10 nm.

In some embodiments, the amorphous conductive material includes at least one of a non-metallic conductive material, a lithium-containing compound, and a metal oxide; wherein the non-metallic conductive material includes at least one of graphite, carbon nanotube, carbon black, graphene, elemental silicon, silicon oxide, and germanium oxide; the lithium-containing compound includes at least one of lithium aluminate, lithium borate, lithium tungstate, lithium lanthanum, lithium titanate, lithium phosphate, lithium titanate, lithium aluminum titanium phosphate, and lithium fluoride; and the metal oxide includes at least one of aluminum oxide, titanium oxide, tungsten oxide, yttrium oxide, and strontium oxide.

In some embodiments, a thickness of the second shell layer is in a range of 5nm to 40nm.

In some embodiments, a ratio of the thickness of the first shell layer to the thickness of the second shell layer is 1: (1 to 40).

In some embodiments, a D50 particle size of the positive electrode material is in a range of 3µm to 15µm.

In some embodiments, the second shell layer covering a surface of the first shell layer away from the inner core includes that the second shell layer cover an aggregate formed by a plurality of inner cores covered with the first shell layer.

The second aspect of the present disclosure provides a method for preparing a positive electrode material for a lithium ion battery. The method includes: a lithium source and a transition metal element source being mixed to obtain a first raw material; the first sintering being performed on the first raw material in an oxygen-containing atmosphere to obtain a precursor material; and the precursor material being dispersed in an amorphous conductive material, the precursor material and the amorphous conductive material being mixed, and the second sintering being performed to obtain the positive electrode material.

In some embodiments, the conditions for the first sintering are: sintering at 700°C to 1000°C for 16 hours to 32 hours.

In some embodiments, the temperature for the second sintering is 100°C to 600°C.

In some embodiments, the lithium source includes at least one of lithium carbonate, lithium nitrate, lithium oxalate, lithium hydroxide, and an organic lithium source.

In some embodiments, the transition metal element source includes a nickel source, a manganese source, and a cobalt source; the nickel source includes one or more of nickel nitrate, nickel sulfate, and nickel chloride; the cobalt source includes one or more of cobalt nitrate, cobalt sulfate, and cobalt chloride; and the manganese source includes one or more of manganese nitrate, manganese sulfate, and manganese chloride.

In some embodiments, a mass percentage of oxygen in the oxygen-containing atmosphere during the first sintering is in a range of 18% to 100%.

In some embodiments, the method further includes: a doping element source being added to the first raw material, wherein the doping element source includes at least one of an A element source, an M element source, and an X element source; the A element includes at least one of Na, K, Be, Mg, Ca, and B; the M element includes one or more of V, Ti, Cr, Fe, Co, Ni, Zn, Nb, Mo, Os, and W; the X element is selected from strongly electronegative elements including at least one of F, S, and Cl.

The third aspect of the present disclosure provides a positive electrode piece. The positive electrode piece includes the positive electrode material for the lithium ion battery provided by the first aspect of the present disclosure or prepared by the method provided by the second aspect of the present disclosure. The positive electrode piece can be used to provide a secondary battery with better rate and power performance and longer cycle service life.

The fourth aspect of the present disclosure provides a secondary battery. The secondary battery includes the positive electrode piece provided by the third aspect of the present disclosure. Since the positive electrode piece provided by the present disclosure is used, the secondary battery can achieve better rate and power performance and longer cycle service life.

The fifth aspect of the present disclosure provides an electric device. The electric device includes the secondary battery provided by the fourth aspect of the present disclosure. Since the secondary battery provided by the present disclosure is used for power supply, the electric device has good market prospects.

### BRIEF DESCRIPTION OF THE DRAWINGS

FIG. 1A is a schematic structural diagram of a cross section of a positive electrode material according to an embodiment of the present disclosure.
FIG. 1B is a partial enlarged view of an area marked by a black circle in FIG. 1A.
FIG. 2 is a transmission electron microscope (TEM) photo of a cross section of the positive electrode material of embodiment 1.
FIG. 3 is a schematic structural diagram of a positive electrode piece according to an embodiment of the present disclosure.
FIG. 4 is a schematic structural diagram of a secondary battery according to an embodiment of the present disclosure.
FIG. 5 is a schematic structural diagram of an electric device according to an embodiment of the present disclosure.

### DETAILED DESCRIPTION

The mechanical stress caused by the anisotropic volume change of the layered transition metal oxide material during the charge and discharge cycle can cause cracks in the material, which can increase the contact area between the electrode active material and the electrolyte to cause side reactions, thereby shortening the cycle life of the material and reducing the rate performance. Furthermore, the side reactions can exacerbate the electrochemical polarization of the battery, increase the operating voltage of the battery, and prolong the charging time. Severe polarization can also affect the safety performance of the battery. There are attempts in the industry to cover the surface of the high-capacity layered transition metal oxide with inert layers of isomeric and/or different materials to reduce the side reactions at the interface of the core positive electrode material, thereby alleviating the cracking of the core positive electrode layered material, and improving the cycle service life of the material. However, the structural and/or elemental differences between the core and the inert layer material often cause increased steric hindrance of active ion diffusion at the core-shell interface (the migration path of the active ion becomes tortuous), resulting in a decrease in the migration rate of the active ion, damage to the rate performance of the material, and exacerbation of the electrochemical polarization. Further, the active ion transport channel is blocked, and accumulated lithium is formed in the inert layer. The accumulation of lithium atoms can also cause the high-valence nickel ions that may exist in the material to continuously react with the electrolyte, thereby causing the accumulated lithium to gradually become "dead lithium", and resulting in a serious attenuation of the cycle performance.

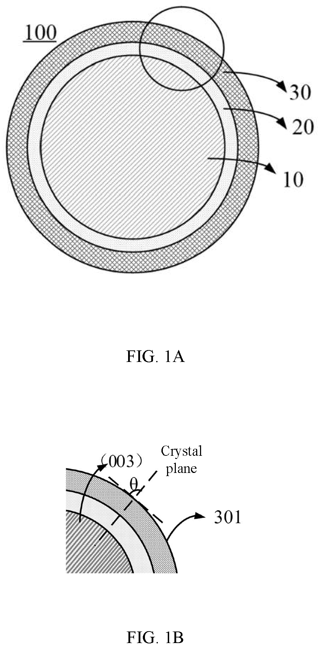

To solve the above problems, referring to FIG. 1A and FIG. 1B, the embodiment of the present disclosure provides a positive electrode material 100 for a lithium ion battery. The positive electrode material 100 for the lithium ion battery includes an inner core 10, a first shell layer 20, and a second shell layer 30. The first shell layer 20 covers the surface of the inner core 10. The second shell layer 30 covers the surface of the first shell layer 20 away from the inner core 10. The inner core 10 includes a first transition metal oxide having a (003) crystal plane. The first shell layer 20 includes a second transition metal oxide. The (003) crystal plane of the transition metal oxide is a characteristic crystal plane of the R3m space group.

An angle θ between a plane where at least part of the (003) crystal planes in the inner core 10 are located and a first interface 301 is 80° to 100°, wherein the first interface 301 is defined as a surface of the second shell layer 30 away from the first shell layer 20.

The material of the second shell layer 30 includes an amorphous conductive material.

In the embodiment of the present disclosure, the space group and/or the material of the first transition metal oxide (i.e., the inner core material) is different from that of the second transition metal oxide (i.e., the first shell layer material). Optionally, the space group of the first transition metal oxide is different from the space group of the second transition metal oxide. Optionally, the material of the first transition metal oxide is different from the material of the second transition metal oxide. Optionally, the space group of the first transition metal oxide is different from the space group of the second transition metal oxide, and the material of the first transition metal oxide is different from the material of the second transition metal oxide.

Specifically, the space group of the first transition metal oxide (i.e., the inner core material) is different from the space group of the second transition metal oxide (i.e., the first shell layer material), and/or the material (i.e., the molecular formula) of the first transition metal oxide is different from the material (i.e., the molecular formula) of the second transition metal oxide. For example, the space group of the first transition metal oxide is R3m, and the space group of the second transition metal oxide is Fd3m and/or Fm3m; in this case, the material (i.e., the molecular formula) of the first transition metal oxide and the material (i.e., the molecular formula) of the second transition metal oxide can be the same or different.

Specifically, in the embodiments of the present disclosure, the material of the first transition metal oxide is different from the material of the second transition metal oxide, including but not limited to the following two cases: (a) the element composition of the first transition metal oxide is different from that of the second transition metal oxide; for example, the first transition metal oxide is LiNi_{0.8}Co_{0.1}Mn_{0.1}O₂, and the second transition metal oxide is Li_{1.01}Na_{0.01}Ni_{0.8}Co_{0.1}Mn_{0.1}O₂; (b) the element composition of the first transition metal oxide is the same as that of the second transition metal oxide, but the molar amount of each element in a molecule is different; for example, the first transition metal oxide is LiNi_{0.8}Co_{0.1}Mn_{0.1}O₂, and the second transition metal oxide is LiNi_{0.5}Co_{0.2}Mn_{0.3}O₂. In either case (a) or (b), in this case, the space group of the first transition metal oxide and the space group of the second transition metal oxide can be the same or different.

The positive electrode material 100 includes the inner core 10, the first shell layer 20, and the second shell layer 30. The first shell layer 20 can prevent the inner core 10 from being in direct contact with the electrolyte or the electrolyte solution, thereby mitigating the cracking of the layered active material caused by the side reaction between the inner core 10 and the electrolyte (e.g., the electrolyte solution), and improving the structural stability of the inner core 10 and prolonging the cycle service life of the material. More importantly, the angle between the plane where at least part of the (003) crystal planes in the inner core 10 are located and the first interface 301 is in the range of 80° to 100°, which can reduce the steric hindrance caused by the difference in the space group and/or the material between the inner core material and the first shell layer material, improve the solid-phase diffusion rate of the active ions (lithium ions), improve the rate performance of the material, reduce the polarization, improve the safety performance of the battery, and prolong the cycle service life of the battery.

In addition, the surface of the first shell layer 20 is further covered with the second shell layer 30 made of amorphous conductive material. The amorphous material has a relatively loose structure, which can provide more channels for the migration of electrons and ions, increase the infiltration of the electrolyte into the positive electrode material 100, reduce the contact impedance of the positive electrode material 100, and improve the power performance of the material. In addition, based on the inherent property of the high capacity of the layered transition metal oxide with the (003) crystal plane in the inner core 10, the positive electrode material 100 has higher energy density, better rate and power performance, longer cycle life, and higher safety performance.

In the present disclosure, the angle between the (003) crystal plane in the inner core 10 and the first interface 301 can be characterized by a transmission electron microscope (TEM). Specifically, the positive electrode material 100 particle is taken and its cross section is exposed by slicing, the slice of the positive electrode material 100 is placed in the TEM, the boundary of the material cross section is observed, the stripes with alternating light and dark are the (003) crystal planes of the inner core material, and the angle θ between a single stripe or an extension line of the single stripe (i.e., the plane where the (003) crystal plane is located) and the first interface 301 is measured. Referring to FIG. 1B, at the intersection of the single stripe or its extension line and the first interface 301, the angle θ between the tangent of the second shell layer 30 at the intersection and the extension line of the (003) crystal plane is in the range of 80° to 100°.

In the present disclosure, the angle between the plane where the (003) crystal plane is located and the first interface 301 can be 81°, 82°, 83°, 84°, 85°, 86°, 87°, 88°, 89°, 90°, 91°, 92°, 93°, 94°, 95°, 96°, 97°, 98°, 99°, etc. In some embodiments of the present disclosure, in the inner core 10, the angle between the plane where at least part of the (003) crystal planes are located and the first interface 301 is 89° to 91°. In this way, it is more conducive to the deintercalation/intercalation of active ions, and in turn is more conducive to improving the rate performance of the positive electrode material 100.

In the present disclosure, the positive electrode material 100 can be spherical, quasi-spherical, or irregularly shaped. For a single positive electrode material 100 particle, the surface of a single inner core 10 can be sequentially covered with the first shell layer 20 and the second shell layer 30; or the surface of a single inner core 10 can be covered with the first shell layer 20, a plurality of inner cores 10 with the first shell layer 20 form an aggregate, and the surface of a single aggregate is covered with the second shell layer 30.

In some embodiments of the present disclosure, the first transition metal oxide (i.e., the inner core material) includes, but is not limited to, Li₁₋ₐAₐ(NiₓCo_{y}Mn_{z})M_{1-x-y-z}O₂; wherein the A element includes at least one of Na, K, Be, Mg, Ca, and B, 0≤a≤0.1; 0≤1-x-y-z≤0.1, x≥0, y≥0, z≥0; the M element includes one or more of V, Ti, Cr, Fe, Co, Ni, Zn, Nb, Mo, Os, and W. Exemplarily, the first transition metal oxide can be, but is not limited to, LiNi_{0.8}Co_{0.1}Mn_{0.1}O₂ (abbreviated as NCM811); LiNi_{0.5}Co_{0.2}Mn_{0.3}O₂ (abbreviated as NCM523); Li(Ni_{0.6}Co_{0.2}Mn_{0.2})_{1.15}O₂ (abbreviated as NCM622); LiNi_{1/3}Co_{1/3}Mn_{1/3}O₂ (abbreviated as NCM111); LiNi_{0.4}Co_{0.3}Mn_{0.3}O₂ (abbreviated as NCM433).

In some embodiments of the present disclosure, the second transition metal oxide (i.e., the first shell layer material) includes, but is not limited to, Li₁₋ₐ₁Aₐ₁(Niₓ₁Co_{y1}Mn_{z1})M_{1-x1-y1-z1}O₂₋ᵥ₁X_{w1}; wherein the A element includes at least one of Na, K, Be, Mg, Ca, and B, 0≤a1≤0.1; 0≤1-x1-y1-z1≤0.1, x1≥0, y1≥0, z1≥0, 0≤v1≤0.05, 0≤w1≤0.1; the M element includes one or more of V, Ti, Cr, Fe, Co, Ni, Zn, Nb, Mo, Os, and W; the X element includes one or more of F, S, and Cl.

In some embodiments of the present disclosure, the space group of the first transition metal oxide is different from the space group of the second transition metal oxide, that is, the space group of the inner core material is different from the space group of the first shell layer material. In some embodiments of the present disclosure, the space group of the second transition metal oxide can include, but is not limited to, Fd3m and/or Fm3m. In this way, the first shell layer 20 has a higher packing density and better structural stability, which is more conducive to inhibiting the side reaction between the inner core 10 and the electrolyte, thereby being more conducive to improving the structural stability of the positive electrode material 100, and further being more conducive to prolonging the cycle service life of the positive electrode material 100.

In some embodiments of the present disclosure, in the inner core 10, the angle between the plane where at least 50% of the (003) crystal planes are located and the first interface 301 is 80° to 100°. Exemplarily, the proportion of the (003) crystal planes having an angle of 80° to 100° with the first interface 301 in the inner core 10 can be 55%, 60%, 65%, 70%, 75%, 80%, 85%, 90%, 95%, 96%, 97%, 98%, 99%, 100%, etc. In this way, the positive electrode material 100 has more fast ion channels, it is more conducive to improving the average rate of solid-phase diffusion of active ions in the positive electrode material 100, and more conducive to improving the rate performance of the battery and reducing the polarization of the battery. In some embodiments, the angle between the plane where at least 50% of the (003) crystal planes are located and the first interface 301 is 89° to 91°. For example, in the inner core 10, the proportion of the (003) crystal planes having an angle of 89° to 91° with the first interface 301 can be 55%, 60%, 65%, 70%, 75%, 80%, 85%, 90%, 95%, 96%, 97%, 98%, 99%, etc.

In some embodiments of the present disclosure, the thickness of the first shell layer 20 is in the range of 1 nm to 10 nm. Exemplarily, the thickness of the first shell layer 20 can be 1 nm, 2 nm, 3 nm, 4 nm, 5 nm, 6 nm, 7 nm, 8 nm, 9 nm, etc. In some embodiments, the thickness of the first shell layer 20 is in the range of 2 nm to 5 nm. Controlling the thickness of the first shell layer 20 in the above range can control the suitable deintercalation/intercalation path of the active ions, control the diffusion rate of the active ions in the positive electrode material 100 in a suitable range, and provide a protective layer with a suitable thickness for the inner core material, thereby effectively inhibiting the side reaction of the inner core material and the electrolyte.

In some embodiments of the present disclosure, the thickness of the second shell layer 30 is in the range of 5 nm to 40 nm. In some embodiments, the thickness of the second shell layer 30 is in the range of 10 nm to 15 nm. Exemplarily, the thickness of the second shell layer 30 can be, but is not limited to, 5 nm, 8 nm, 10 nm, 12 nm, 15 nm, 18 nm, 20 nm, 22 nm, 25 nm, 28 nm, 30 nm, 32 nm, 35 nm, 38 nm, etc. Controlling the thickness of the second shell layer 30 in the above range can effectively improve the electronic conductivity of the material, control the suitable length of the migration path of the active ions in the second shell layer 30, and have sufficient pores or channels to adsorb the electrolyte, so that the positive electrode material 100 has better power performance and higher rate performance.

In some embodiments of the present disclosure, the ratio of the thickness of the first shell layer 20 to the thickness of the second shell layer 30 is in the range of 1:(1 to 40). Exemplarily, the ratio of the thickness of the first shell layer 20 to the thickness of the second shell layer 30 can be 1:1, 1:2, 1:5, 1:8, 1:10, 1:12, 1:15, 1:18, 1:20, 1:22, 1:25, 1:28, 1:30, 1:32, 1:35, 1:38, etc. In some embodiments of the present disclosure, the ratio of the thickness of the first shell layer 20 to the thickness of the second shell layer 30 is in the range of 1:(3 to 8). In this way, the rate performance and the power performance of the entire positive electrode material 100 are more balanced, which is more conducive to the application prospect of the positive electrode material 100.

In some embodiments of the present disclosure, the amorphous conductive material (i.e., the material of the second shell layer 30) includes, but is not limited to, at least one of a non-metallic conductive material, a lithium-containing compound, and a metal oxide. The non-metallic conductive material includes, but is not limited to, at least one of graphite, a carbon tube, carbon black, graphene, elemental silicon, silicon oxide, and germanium oxide. The lithium-containing compound includes, but is not limited to, at least one of lithium aluminate, lithium borate, lithium tungstate, lithium lanthanum, lithium titanate, lithium phosphate, lithium titanate, lithium aluminum titanium phosphate, and lithium fluoride. The metal oxide includes, but is not limited to, at least one of aluminum oxide, titanium oxide, tungsten oxide, yttrium oxide, and strontium oxide.

In some embodiments of the present disclosure, the D50 particle size of the positive electrode material 100 is in the range of 3 to 15 µm. Controlling the D50 of the positive electrode material 100 in the above range can control the transmission path of lithium ions in the positive electrode material 100 to be shorter, thereby being conducive to ensuring better rate performance of the battery, and achieving a higher compaction density. Exemplarily, the D50 particle size of the positive electrode material 100 can be, but is not limited to, 3 µm, 5 µm, 8 µm, 10 µm, 12 µm, 15 µm, etc. In the embodiments of the present disclosure, the D50 of the positive electrode material 100 is tested by a laser particle size analyzer.

The present disclosure provides a method for preparing a positive electrode material 100. The method includes:
S01. mixing a lithium source and a transition metal element source to obtain a first raw material; performing first sintering on the first raw material in an oxygen-containing atmosphere to obtain a precursor material; and
S02. dispersing the precursor material in an amorphous conductive material, mixing the precursor material and the amorphous conductive material, and performing second sintering to obtain the positive electrode material 100.

The preparation method is simple in operation, high in process reliability, and suitable for large-scale industrial production.

In some embodiments of the present disclosure, the conditions for the first sintering are: sintering at 700°C to 1000°C for 16 hours to 32 hours. In this way, it is conducive to the transformation of the material of the surface of the inner core precursor material into the transition metal oxide with the space group of Fm3m (i.e., the second shell layer 30 with the space group of Fm3m) to obtain the precursor material, and improving the structural stability of the packing density of the material with the space group of Fm3m; meanwhile, it is conducive to improving the interface bonding force between the inner core 10 and the second shell layer 30, and improving the cycle service life of the positive electrode material 100.

In some embodiments of the present disclosure, the equipment used in the first sintering includes, but is not limited to, a rotary furnace, a rotary furnace, a box furnace, a tube furnace, a roller hearth kiln, a pushed slab kiln, or a fluidized bed.

In some embodiments of the present disclosure, the lithium source includes, but is not limited to, at least one of lithium carbonate, lithium nitrate, lithium oxalate, lithium hydroxide, and an organic lithium source.

In some embodiments of the present disclosure, the transition metal element source includes, but is not limited to, a nickel source, a manganese source, and a cobalt source. The nickel source includes, but is not limited to, one or more of nickel nitrate, nickel sulfate, and nickel chloride. The cobalt source includes, but is not limited to, one or more of cobalt nitrate, cobalt sulfate, and cobalt chloride, and the manganese source includes one or more of manganese nitrate, manganese sulfate, and manganese chloride. In some specific embodiments of the present disclosure, the gradient temperature rise includes: rising the temperature to less than or equal to 500°C at a temperature rise rate of not higher than 10°C/min, and holding the temperature for 2h to 9h; and then rising the temperature to less than or equal to 850°C at a temperature rise rate of not higher than 13.3°C/min, and holding the temperature for 8h to 25h. In this way, the lithium source is fully melted, the contact between the lithium source and the transition metal source is enhanced, the solid-phase reaction is promoted, and the lithium ions are embedded into the crystal lattices to form the inner core material, while the packing density of the inner core material is improved, thereby facilitating the migration of the lithium ions between the inner core 10, the inner core 10 and the first shell layer 20 during the charge and discharge cycles. Meanwhile, the migration rate of the lithium ions during the reaction process is not affected, and the risk of forming a superlattice at the crystal surface in the inner core material affecting the crystal surface orientation in the inner core 10 is reduced.

In some embodiments of the present disclosure, the oxygen mass percentage in the oxygen-containing atmosphere during the first sintering process varies in the range of 18% to 100%. Exemplarily, the oxygen mass percentage in the oxygen-containing atmosphere at each time period can be independently selected from 20%, 22%, 25%, 28%, 30%, 32%, 35%, 38%, 40%, 42%, 45%, 48%, 50%, 52%, 55%, 58%, 60%, 62%, 65%, 68%, 70%, 72%, 75%, 78%, 80%, 82%, 85%, 88%, 90%, 92%, 95%, 98%, etc. In some embodiments, the oxygen mass percentage in the oxygen-containing atmosphere varies in the range of 19% to 95%. In this way, it is conducive to the transformation of the material of the surface layer of the inner core precursor material into a different space group structure from the inner core material, thereby forming the first shell layer 20, and controlling the oxygen mass percentage to vary in the above range is more conducive to improving the packing density of the material of the first shell layer 20 and the interface bonding force between the first shell layer 20 and the inner core 10. In some embodiments, the oxygen mass percentage in the oxygen-containing atmosphere is gradually increased first and then kept unchanged. In this way, at a high temperature, other components (e.g., a transition metal element source) can be fused with the lithium source, the melting point of the lithium source is reduced, the formation energy of the solid phase reaction is reduced, thereby inducing the growth of the material of the inner core 10 along the (003) crystal plane.

In some embodiments of the present disclosure, a dopant element source is further added to the first raw material, wherein the dopant element source includes at least one of an A element source, an M element source, and an X element source; the A element includes at least one of Na, K, Be, Mg, Ca, and B; the M element includes one or more of V, Ti, Cr, Fe, Co, Ni, Zn, Nb, Mo, Os, and W; and the X element is selected from a strongly electronegative element, including but not limited to at least one of F, S, and Cl. The dopant element is doped into the inner core material to optimize the electrochemical performance or structural stability of the inner core material. Exemplarily, Ti can provide the cycle performance and rate performance of the material without reducing the theoretical capacity of the inner core material; Mg can stabilize the configuration of materials with expanded atomic interlayer spacing after delithiation, or can improve the initial discharge capacity of the inner core 10. More importantly, the dopant element can continue to penetrate into the surface layer of the inner core precursor after the formation of the inner core precursor and perform doping during the first sintering, so that a material different from the inner core 10 is formed, and the inner core precursor is transformed into the first shell layer 20. Understandably, in the above process, the continuous doping of the element can change the space group of the material in the first shell layer 20, or can simply change the element composition.

In some embodiments of the present disclosure, in S02, the precursor material is dispersed in the amorphous conductive material, and the second raw material is obtained after mixing, and a second sintering is performed on the second raw material. In some embodiments of the present disclosure, in S02, the mixing includes, but is not limited to, solid-phase dispersion or liquid-phase dispersion. The solid-phase dispersion can be performed in a solid-phase mixing device, for example, a planetary ball mill or the like.

In some embodiments of the present disclosure, in S02, the temperature of the second sintering can be 100°C to 600°C. In some embodiments, the second sintering is also a gradient temperature rise, wherein the gradient temperature rise includes: rising the temperature at a third temperature rise rate of less than or equal to 10°C/min, and holding the temperature for 1h to 5h. In some embodiments, during the cooling process after the second sintering, the cooling rate is greater than or equal to 50°C/min.

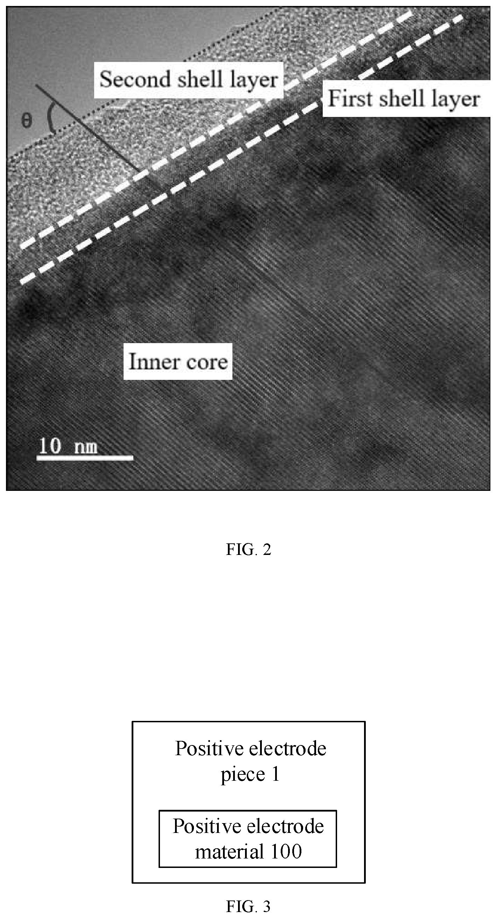

The present disclosure also provides a positive electrode piece. As shown in FIG. 3, the positive electrode piece 1 includes the positive electrode material 100. The positive electrode piece 1 can be used to achieve a secondary battery with higher energy density, better rate and power performance, longer cycle service life and higher safety performance.

In some embodiments of the present disclosure, the positive electrode piece 1 includes a (positive electrode) current collector and a positive electrode active material layer arranged on at least one side surface of the current collector. The positive electrode active material layer includes the positive electrode material, a binder and a conductive agent.

In some embodiments of the present disclosure, the positive electrode current collector is selected from any known positive electrode current collector in the art, for example, an aluminum foil or the like. The binder and the conductive agent can be respectively selected from any known material in the art.

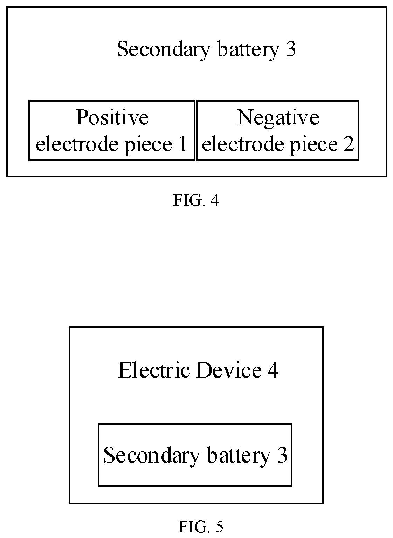

The present disclosure also provides a secondary battery. As shown in FIG. 4, the secondary battery 3 includes the positive electrode piece 1 provided by the embodiments of the present disclosure. Due to the adoption of the positive electrode piece 1 provided by the present disclosure, the secondary battery 3 has higher energy density, and can achieve better rate and power performance, longer cycle service life and higher safety performance.

In some embodiments of the present disclosure, the secondary battery 3 can be a liquid battery using an electrolyte, or a solid-state battery or a semi-solid-state battery.

In some embodiments of the present disclosure, the secondary battery 3 includes the positive electrode piece 1, a separator (not shown), a negative electrode piece 2 and an electrolyte (not shown). The negative electrode piece can be any known negative electrode piece in the art. The separator can be any known separator in the art. The electrolyte can be selected from any known electrolyte formula known to a person skilled in the art.

The present disclosure also provides an electric device. As shown in FIG. 5, the electric device 4 includes the secondary battery 3 provided by the embodiments of the present disclosure. In some embodiments of the present disclosure, the electric device 4 further includes a load (such as a motor) connected with the secondary battery 3. The secondary battery 3 is used to supply power to the load. Due to the adoption of the secondary battery 3 provided by the present disclosure for power supply, the electric device 4 has a better market prospect.

In some embodiments of the present disclosure, the electric device 4 includes, but is not limited to, 3C electronic products, power vehicles, and the like.

The technical solutions of the present disclosure are further described in following embodiments.

### Embodiments 1 to 11

For convenience of comparison and reading, the parameters of the positive electrode material 100 provided in Embodiments 1 to 11 are summarized in Table 1.

In order to highlight the beneficial effects of the embodiments of the present disclosure, the following comparative examples are provided.

### Comparative Examples 1 to 9

For convenience of comparison and reading, the parameters of the positive electrode material 100 of Comparative Examples 1 to 9 are also summarized in Table 1.

### TEM characterization test

TEM is used to select the boundary of the positive electrode material slice for observation, and the angle between the (003) crystal plane of the inner core and the first interface 301 is determined. For the same positive electrode material, 5 to 10 slices are tested, 2 to 3 fields of view of 20nm×20nm are observed for each slice, the obtained data are subjected to normal fitting distribution, the median of the distribution is taken as the angle θ, the distribution probability of θ falling in the range of 80° to 100° is taken as the proportion of the (003) crystal planes satisfying the angle, and is recorded in Table 1. Meanwhile, the thicknesses of the first shell layer 20 and the second shell layer 30 are measured, and the average value is calculated, and the result is recorded in Table 1. In the drawings, FIG. 2 is a typical TEM photograph of the cross section of the positive electrode material of Embodiment 1.

**Table 1**

| | The material of the inner core | The space group of the inner core mater ial | The thickne ss of the first shell layer a(nm) | The material of the first shell layer | The thickness of the second shell layer b(nm) | The space group of the first shell layer material | The material of the second shell layer | b/a | Angle θ(°) | Proporti on of (003) crystal planes satisfying the angle |
|---|---|---|---|---|---|---|---|---|---|---|
| Embodiment 1 | NCM811 | R3m | 2.2281 | Li_{1.01}Na_{0.01}Ni_{0.8}Co_{0.1}Mn_{0.1}O₂ | 11.7533 | Fm3m | Lithium aluminate | 5.3 | 89 | 68% |
| Embodiment 2 | NCM811 | | 2.2365 | Li_{1.01}Na_{0.01}Ni_{0.8}Co_{0.1}Mn_{0.1}O₂ | 11.6358 | Fd3m | Lithium aluminate | 5.2 | 82 | 62% |
| Embodiment 3 | NCM811 | | 2.0721 | Li_{1.01}Na_{0.01}Ni_{0.8}Co_{0.1}Mn_{0.1}O₂ | 11.8708 | Fm3m | Lithium aluminate | 5.7 | 89 | 50% |
| Embodiment 4 | NCM811 | | 2.2727 | Li_{1.01}Na_{0.01}Ni_{0.8}Co_{0.1}Mn_{0.1}O₂ | 11.577 | Fm3m | Lithium aluminate | 5.1 | 89 | 40% |
| Embodiment 5 | NCM523 | | 3.5482 | LiNi_{0.50}Co_{0.20}Mn_{0.30}O₂ | 19.1851 | Fm3m | Lithium titanate | 5.4 | 84 | 54% |
| Embodiment 6 | NCM811 | | 3.7323 | Li_{0.99}Na_{0.01}Ni_{0.8}Co_{0.1}Mn_{0.1}O₂ | 14.152 | Fm3m | Lithium titanium phosphate | 3.8 | 82 | 48% |
| Embodiment 7 | NCM811 | | 5.5432 | Li_{1.02}Na_{0.01}Ni_{0.8}Co_{0.1}Mn_{0.02}Zr_{0.02}O₂ | 12.373 | Fd3m | Aluminum oxide | 2.2 | 86 | 44% |
| Embodiment 8 | NCM811 | | 3.6841 | Li_{1.02}Na_{0.01}Ni_{0.8}Co_{0.1}Mn_{0.02}Zr_{0.02}O₂ | 15.68 | Fd3m | Aluminum oxide | 4.3 | 86 | 56% |
| Embodiment 9 | NCM811 | | 6.8262 | Li_{1.02}Na_{0.01}Ni_{0.8}Co_{0.1}Mn_{0.02}Zr_{0.02}O₂ | 26.8426 | Fd3m | Aluminum oxide | 3.9 | 86 | 56% |
| Embodiment 10 | NCM622 | | 2.7025 | LiNi_{0.60}Co_{0.20}Mn_{0.20}O₂ | 32.4431 | Fm3m | Yttrium oxide | 12.0 | 88 | 59% |
| Embodiment 11 | NCM811 | | 2.7592 | LiNi_{0.8}Co_{0.1}Mn_{0.1}O₂ | 48.798 | Fm3m | Silicon oxide | 17.7 | 92 | 42% |
| Comparative Example 1 | NCM811 | | 3.081 | LiNi_{0.80}Co_{0.10}Mn_{0.10}O₂ | 12.87 | Fm3m | Lithium fluoride | 4.2 | 64 | 58% |
| Com | NCM811 | | 5.8215 | Li_{1.01}Na_{0.01}Ni_{0.8}Co_{0.1}Mn_{0.1}O₂ | 31.001 | R3m | Lithium | 5.3 | 62 | 40% |
| parative Example 2 | | | | | | | titanate | | | |
| Comparative Example 3 | NCM811 | | 8.425 | LiNi_{0.8}Co_{0.1}Mn_{0.1}Y_{0.02}O₂ | 36.066 | Fd3m | Lithium titanium phosphate | 4.3 | 58 | 53% |
| ComparativeExample 4 | NCM622 | | 9.679 | LiNi_{0.60}Co_{0.20}Mn_{0.20}Y_{0.02}O₂ | 26.508 | R3m | Lithium fluoride | 2.7 | 77 | 53% |
| ComparativeExample 5 | NCM811 | | 3.615 | LiNi_{0.8}Co_{0.1}Mn_{0.1}Y_{0.01}O₂ | 14.033 | Fm3m | Aluminum oxide | 3.9 | 35 | 45% |
| ComparativeExample 6 | NCM811 | | 20.303 | Li_{0.99}Na_{0.01}Ni_{0.8}Co_{0.1}Mn_{0.1}O₂ | 83.567 | Fd3m | Yttrium oxide | 4.1 | 67 | 52% |
| ComparativeExample 7 | NCM433 | | 49.165 | LiNi_{0.40}Co_{0.30}Mn_{0.30}O₂ | 97.385 | R3m | Silicon oxide | 2.0 | 50 | 47% |
| ComparativeExample 8 | NCM622 | | 4.4251 | LiNi_{0.60}Co_{0.20}Mn_{0.20}O₂ | 31.633 | Fm3m | Yttrium oxide | 7.1 | 106 | 51% |
| Com parati ve Example 9 | NCM622 | | 2.7592 | LiNi_{0.6}Co_{0.2}Mn_{0.2}O₂ | 48.798 | Fm3m | / | 17.7 | 92 | 42% |

### Electrochemical performance test

### (1) Assembly of test battery

Preparation of positive electrode piece: the positive electrode material of each of the embodiments and the comparative examples in Table 2 is mixed with the binder (e.g., styrene butadiene rubber) and the conductive agent (e.g., super p) at a mass ratio of 98:1:1, and then stirred in a proper amount of solvent (e.g., N-methylpyrrolidone, NMP) for 2h to obtain a positive electrode slurry; the positive electrode slurry is coated on the surface of a positive electrode current collector (e.g., aluminum foil), dried, rolled, and slitted to obtain each positive electrode piece.

Preparation of negative electrode piece: a negative electrode material (e.g., graphite), a thickening agent (specifically sodium carboxymethyl cellulose, CMC), a binder (e.g., styrene butadiene rubber, SBR), and a conductive agent (e.g., acetylene black) are mixed at a mass ratio of 97:1:1:1, a proper amount of deionized water is added, and after stirring and dispersion, a negative electrode slurry is obtained; the obtained negative electrode slurry is uniformly coated on the surface of a negative electrode current collector (e.g., copper foil), dried, rolled, and slitted to obtain each negative electrode piece.

Assembly of battery: the prepared positive electrode piece and negative electrode piece are stacked in the order of positive electrode/separator/negative electrode, wherein the separator is a polypropylene separator, the stacked battery cell is placed in a vacuum oven at 100°C and baked for 12h, electrolyte is injected, wherein the electrolyte is 1mol LiPF₆ dissolved in an organic solvent with a mass ratio of ethylene carbonate to methyl ethyl carbonate of 7:3, and after sealing, aging, formation, aging, and capacity grading, and other processes, a lithium ion battery is obtained.

(2) Cycle service life test: at 25°C, the lithium ion battery is charged at 1C rate, discharged at 1C rate, and tested at 100% cycle depth (100% DOD) until the capacity retention rate of the battery is lower than 70%, and the cycle number at this time is recorded, which is the cycle service life of the battery. The results are summarized in Table 2.

(3) Rate performance test: at 25°C, the lithium ion battery is charged to 100% SOC at 0.2C rate, and discharged to the lower limit voltage at 5C rate, and the ratio of the discharge capacity at 5C to the discharge capacity at 0.33C is recorded. The results are summarized in Table 2.

**Table 2**

| Experiment No. | Cycle service life | Rate performance |
|---|---|---|
| Embodiment 1 | 1964 | 91.43% |
| Embodiment 2 | 1806 | 90.15% |
| Embodiment 3 | 1787 | 89.84% |
| Embodiment 4 | 1768 | 89.52% |
| Embodiment 5 | 1956 | 89.00% |
| Embodiment 6 | 1897 | 87.00% |
| Embodiment 7 | 1883 | 78.92% |
| Embodiment 8 | 1796 | 78.12% |
| Embodiment 9 | 1839 | 78.52% |
| Embodiment 10 | 1710 | 77.32% |
| Embodiment 11 | 1551 | 77.20% |
| Comparative Example 1 | 1493 | 75.26% |
| Comparative Example 2 | 1163 | 71.27% |
| Comparative Example 3 | 858 | 69.94% |
| Comparative Example 4 | 768 | 68.97% |
| Comparative Example 5 | 446 | 49.00% |
| Comparative Example 6 | 69 | 55.76% |
| Comparative Example 7 | 40 | 51.04% |
| Comparative Example 8 | 1275 | 85.48% |
| Comparative Example 9 | 1095 | 62.9% |

As can be seen from the data in Tables 1 and 2, the positive electrode material 100 provided by the embodiments of the present disclosure has both longer cycle service life and better rate performance. As can be seen from the data of Comparative Examples 1 to 4, when other parameters are similar, the proportion of the (003) crystal planes with the angle θ between the (003) crystal plane in the inner core 10 of the positive electrode material 100 and the first interface 301 in the range of 80° to 100° is within the range further suggested by the present disclosure, which is more conducive to the cycle performance and rate performance of the positive electrode material 100. Furthermore, when the above proportions are all greater than or equal to 50%, the larger the proportion of the (003) crystal planes in accordance with the present disclosure, the more conducive to the electrochemical performance of the positive electrode material 100.

As can be seen from the data of Comparative Examples 7 to 9, when the thicknesses of the first shell layer 20 and the second shell layer 30 are both within the range further suggested by the embodiment of the present disclosure (Embodiment 7), the positive electrode material 100 also has better cycle performance and rate performance.

The above is an exemplary embodiment of the present disclosure, and it should be noted that a person skilled in the art can make some improvements and modifications without departing from the principle of the present disclosure, and these improvements and modifications are also considered to be within the protection scope of the present disclosure.

## Claims

1. A positive electrode material (100) for a lithium ion battery, the positive electrode material (100) comprising: an inner core (10), a first shell layer (20), and a second shell layer (30), the first shell layer (20) covering a surface of the inner core (10), and the second shell layer (30) covering a surface of the first shell layer (20) away from the inner core (10);
the inner core (10) comprising a first transition metal oxide having (003) crystal planes, and the first shell layer (20) comprising a second transition metal oxide;
at least one of the following being different between the first transition metal oxide and the second transition metal oxide: a space group and a material;
an angle between a plane where at least part of the (003) crystal planes in the inner core (10) are located and a first interface (301) being 80° to 100°, and the first interface (301) being defined as a surface of the second shell layer (30) away from the first shell layer (20); and
a material of the second shell layer (30) comprising an amorphous conductive material.

2. The positive electrode material (100) according to claim 1, wherein in the inner core (10), the angle between the plane where at least 50% of the (003) crystal planes are located and the first interface (301) is 80° to 100°.

3. The positive electrode material (100) according to claim 1, wherein in the inner core (10), the angle between the plane where at least part of the (003) crystal planes are located and the first interface (301) is 89° to 91°.

4. The positive electrode material (100) according to any one of claims 1 to 3, wherein the first transition metal oxide comprises Li₁₋ₐAₐ(NiₓCo_{y}Mn_{z})M_{1-x-y-z}O₂₋ᵥX_{w}; A element comprises at least one of Na, K, Be, Mg, Ca, and B, 0≤a≤0.1; 0≤1-x-y-z≤0.1, x≥0, y≥0, z≥0, 0≤v≤0.05, 0≤w≤0.1; M element comprises one or more of V, Ti, Cr, Fe, Co, Ni, Zn, Nb, Mo, Os, and W; and X element comprises one or more of F, S, and Cl.

5. The positive electrode material (100) according to any one of claims 1 to 4, wherein the second transition metal oxide comprises Li₁₋ₐ₁Aₐ₁(Niₓ₁Co_{y1}Mn_{z1})M_{1-x1-y1-z1}O₂₋ᵥ₁X_{w1}; A element comprises at least one of Na, K, Be, Mg, Ca, and B, 0≤a1≤0.1; 0≤1-x1-y1-z1≤0.1, x1≥0, y1≥0, z1≥0, 0≤v1≤0.05, 0≤w1≤0.1; M element comprises one or more of V, Ti, Cr, Fe, Co, Ni, Zn, Nb, Mo, Os, and W; and X element comprises one or more of F, S, and Cl.

6. The positive electrode material (100) according to any one of claims 1 to 5, wherein a space group of the second transition metal oxide is different from a space group of the first transition metal oxide.

7. The positive electrode material (100) according to any one of claims 1 to 6, wherein the space group of the second transition metal oxide is at least one of Fd3m and Fm3m.

8. The positive electrode material (100) according to any one of claims 1 to 7, wherein a thickness of the first shell layer (20) is in a range of 1 nm to 10 nm.

9. The positive electrode material (100) according to any one of claims 1 to 8, wherein the amorphous conductive material comprises at least one of a non-metallic conductive material, a lithium-containing compound, and a metal oxide; the non-metallic conductive material comprises at least one of graphite, carbon nanotube, carbon black, graphene, elemental silicon, silicon oxide, and germanium oxide; the lithium-containing compound comprises at least one of lithium aluminate, lithium borate, lithium tungstate, lithium lanthanum, lithium titanate, lithium phosphate, lithium titanate, lithium aluminum titanium phosphate, and lithium fluoride; and the metal oxide comprises at least one of aluminum oxide, titanium oxide, tungsten oxide, yttrium oxide, and strontium oxide.

10. The positive electrode material (100) according to any one of claims 1 to 9, wherein a thickness of the second shell layer (30) is in a range of 5nm to 40nm.

11. The positive electrode material (100) according to any one of claims 1 to 10, wherein a ratio of the thickness of the first shell layer (20) to the thickness of the second shell layer (30) is 1: (1 to 40).

12. The positive electrode material (100) according to any one of claims 1 to 11, wherein a D50 particle size of the positive electrode material (100) is in a range of 3µm to 15µm.

13. The positive electrode material (100) according to any one of claims 1 to 12, wherein the second shell layer (30) covering a surface of the first shell layer (20) away from the inner core (10) comprises that the second shell layer (30) cover an aggregate formed by a plurality of inner cores (10) covered with the first shell layer (20).

14. A method for preparing a positive electrode material for a lithium ion battery, comprising:
mixing a lithium source and a transition metal element source to obtain a first raw material;
performing first sintering on the first raw material in an oxygen-containing atmosphere to obtain a precursor material; and
dispersing the precursor material in an amorphous conductive material, mixing the precursor material and the amorphous conductive material, and performing second sintering to obtain the positive electrode material.

15. The method according to claim 14, wherein the conditions for the first sintering are: sintering at 700°C to 1000°C for 16 hours to 32 hours.

16. The method according to claim 14 or 15, wherein the temperature for the second sintering is 100°C to 600°C.

17. The method according to any one of claims 14 to 16, wherein a mass percentage of oxygen in the oxygen-containing atmosphere during the first sintering is in a range of 18% to 100%.

18. The method according to any one of claims 14 to 17, further comprising: adding a doping element source to the first raw material, the doping element source comprising at least one of an A element source, an M element source, and an X element source; the A element comprising at least one of Na, K, Be, Mg, Ca, and B; the M element comprising one or more of V, Ti, Cr, Fe, Co, Ni, Zn, Nb, Mo, Os, and W; the X element being selected from strongly electronegative elements comprising at least one of F, S, and Cl.

19. A positive electrode piece (1), comprising the positive electrode material (100) for the lithium ion battery according to any one of claims 1 to 13 or prepared by the method according to any one of claims 14 to 18.

20. A secondary battery (3), comprising the positive electrode material (100) for the lithium ion battery according to any one of claims 1 to 13 or prepared by the method according to any one of claims 14 to 18.
